# EUROPEAN PATENT APPLICATION

(11) **EP 3 249 514 A1**
(43) Date of publication of application: **29.11.2017**
(21) Application number: 17168927.6
(22) Date of filing: 02.05.2017
(51) Int. Cl.: G06F 3/0488, G06F 1/16

(54) **METHOD AND DEVICE FOR DETERMINING OPERATION MODE OF TERMINAL**

(30) Priority: 24.05.2016 CN 201610350467
(71) Applicant: Beijing Xiaomi Mobile Software Co., Ltd., Beijing 100085 (CN)
(72) Inventor: WU, Ming, Beijing, 100085 (CN); CUI, Hengbin, Beijing, 100085 (CN); WANG, Qianqian, Beijing, 100085 (CN)
(74) Representative: Jeffrey, Philip Michael

(57) **Abstract**

The present disclosure relates to a method and device for determining an operation mode of a terminal. The method includes: receiving (S101) an instruction for switching to a one-handed operation mode; acquiring (S102) touch information of a user on a touch edge of a mobile terminal; and controlling (S103) the mobile terminal to enter a corresponding one of one-handed operation modes according to the touch information, wherein the one-handed operation modes include a first operation mode and a second operation mode. Through technical solutions of the present disclosure, the corresponding one-handed operation mode can be entered according to the touch information of the touch edge of the mobile terminal without manually setting the one-handed operation mode, and thus user operation is reduced, and user experience is improved.

## Description

### TECHNICAL FIELD

The present disclosure generally relates to the field of terminals, and more particularly, to a method and device for determining an operation mode of a terminal.

### BACKGROUND

With the emergence of mobile phones having a large screen, one-handed modes have become available in order to facilitate users' operation. If a user wants to enter the one-handed mode, settings need to be performed manually, and thus user operation is relatively complicated, and user experience is not good.

### SUMMARY

Embodiments of the present disclosure provide a method and device for determining an operation mode of a terminal, including the following technical solutions:

According to a first aspect of embodiments of the present disclosure, there is provided a method for determining an operation mode of a terminal, applied in a mobile terminal, the method includes:
receiving an instruction for switching to a one-handed operation mode;
acquiring touch information of a user on a touch edge of a mobile terminal; and
controlling the mobile terminal to enter a corresponding one of one-handed operation modes according to the touch information, wherein the one-handed operation modes include a first operation mode and a second operation mode.

In one embodiment, the acquiring the touch information of the user on the touch edge of the mobile terminal includes:
acquiring one or more first touch points on a first edge region of the mobile terminal and one or more second touch points on a second edge region of the mobile terminal, wherein the first edge region and the second edge region are on the touch edge of the mobile terminal; and
the controlling the mobile terminal to enter the corresponding one of one-handed operation modes according to the touch information includes:
comparing the number of the one or more first touch points with the number of the one or more second touch points to obtain a comparison result; and
controlling the mobile terminal to enter the corresponding one of one-handed operation modes according to the comparison result.

In one embodiment, the controlling the mobile terminal to enter the corresponding one of one-handed operation modes according to the comparison result includes:
if the number of the one or more first touch points is greater than the number of the one or more second touch points, controlling the mobile terminal to enter the first operation mode; and
if the number of the one or more first touch points is less than the number of the one or more second touch points, controlling the mobile terminal to enter the second operation mode.

In one embodiment, the controlling the mobile terminal to enter the corresponding one of one-handed operation modes according to the comparison result includes:
if the number of the one or more first touch points is equal to the number of the one or more second touch points, comparing a first area occupied by the one or more first touch points with a second area occupied by the one or more second touch points;
if the first area is greater than the second area, controlling the mobile terminal to enter the second operation mode; and
if the first area is less than the second area, controlling the mobile terminal to enter the first operation mode.

In one embodiment, the acquiring the touch information of the user on the touch edge of the mobile terminal includes:
acquiring a tap operation received on the first edge region or the second edge region of the mobile terminal, wherein the first edge region and the second edge region are on the touch edge of the mobile terminal; and
the controlling the mobile terminal to enter the corresponding one of one-handed operation modes according to the touch information includes:
   if the tap operation is received on the first edge region, controlling the mobile terminal to enter the second operation mode; and
   if the tap operation is received on the second edge region, controlling the mobile terminal to enter the first operation mode.

In one embodiment, the first operation mode is a right-handed operation mode, and the second operation mode is a left-handed operation mode.

According to a second aspect of embodiments of the present disclosure, there is provided a device for determining an operation mode of a terminal, including:
a receiving module configured to receive an instruction for switching to a one-handed operation mode;
an acquisition module configured to acquire touch information of a user on a touch edge of a mobile terminal; and
a control module configured to control the mobile terminal to enter a corresponding one of one-handed operation modes according to the touch information, wherein the one-handed operation modes include a first operation mode and a second operation mode.

In one embodiment, the acquisition module includes:
a first acquisition sub-module configured to acquire one or more first touch points on a first edge region of the mobile terminal and one or more second touch points on a second edge region of the mobile terminal, wherein the first edge region and the second edge region are on the touch edge of the mobile terminal; and
the control module includes:
   a comparison sub-module configured to compare the number of the one or more first touch points with the number of the one or more second touch points to obtain a comparison result; and
   a first processing sub-module configured to control the mobile terminal to enter the corresponding one of one-handed operation modes according to the comparison result.

In one embodiment, the first processing sub-module is configured to:
if the number of the one or more first touch points is greater than the number of the one or more second touch points, control the mobile terminal to enter the first operation mode; and
if the number of the one or more first touch points is less than the number of the one or more second touch points, control the mobile terminal to enter the second operation mode.

In one embodiment, the first processing sub-module is further configured to:
if the number of the one or more first touch points is equal to the number of the one or more second touch points, compare a first area occupied by the one or more first touch points with a second area occupied by the one or more second touch points;
if the first area is greater than the second area, control the mobile terminal to enter the second operation mode; and
if the first area is less than the second area, control the mobile terminal to enter the first operation mode.

In one embodiment, the acquisition module includes:
a second acquisition sub-module configured to acquire a tap operation received on the first edge region or the second edge region of the mobile terminal, wherein the first edge region and the second edge region are on the touch edge of the mobile terminal; and
the control module includes:
   a second processing sub-module configured to if the tap operation is received on the first edge region, control the mobile terminal to enter the second operation mode; and if the tap operation is received on the second edge region, control the mobile terminal to enter the first operation mode.

In one embodiment, the first operation mode is a right-handed operation mode, and the second operation mode is a left-handed operation mode.

According to a third aspect of embodiments of the present disclosure, there is provided a device for determining an operation mode of a terminal, including:
a processor; and
a memory for storing instructions executable by the processor;
wherein the processor is configured to:
   receive an instruction for switching to a one-handed operation mode;
   acquire touch information of a user on a touch edge of a mobile terminal; and
   control the mobile terminal to enter a corresponding one of one-handed operation modes according to the touch information, wherein the one-handed operation modes include a first operation mode and a second operation mode.

According to a fourth aspect of embodiments of the present disclosure, there is provided a computer program, which when executed on a processor of a device, performs a method according to any one of the above methods according to a first aspect of embodiments of the present disclosure.

Technical solutions provided by embodiments of the present disclosure may include the following advantageous effects.

In above technical solutions, when the instruction for switching to the one-handed operation mode is received, the terminal acquires the touch information of the user on the touch edge of the mobile terminal, and controls the mobile terminal to enter the corresponding one-handed operation mode (such as a left-handed operation mode or a right-handed operation mode) according to the touch information, and thus it is convenient for user operation, and user experience is improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for determining an operation mode of a terminal according to an exemplary embodiment.
Fig. 2 is a flow chart of another method for determining an operation mode of a terminal according to an exemplary embodiment.
Fig. 3 is a flow chart of a further method for determining an operation mode of a terminal according to an exemplary embodiment.
Fig. 4 is a schematic diagram illustratively showing one or more touch points according to an exemplary embodiment.
Fig. 5 is another schematic diagram illustratively showing one or more touch points according to an exemplary embodiment.
Fig. 6 is a flow chart of a further method for determining an operation mode of a terminal according to an exemplary embodiment.
Fig. 7 is a further schematic diagram illustratively showing one or more touch points according to an exemplary embodiment.
Fig. 8 is a flow chart of a further method for determining an operation mode of a terminal according to an exemplary embodiment.
Fig. 9 is a block diagram of a device for determining an operation mode of a terminal according to an exemplary embodiment.
Fig. 10 is a block diagram of an acquisition module in a device for determining an operation mode of a terminal according to an exemplary embodiment.
Fig. 11 is a block diagram of a control module in a device for determining an operation mode of a terminal according to an exemplary embodiment.
Fig. 12 is a block diagram of an acquisition module in another device for determining an operation mode of a terminal according to an exemplary embodiment.
Fig. 13 is a block diagram of a control module in another device for determining an operation mode of a terminal according to an exemplary embodiment.
Fig. 14 is a block diagram of a device for determining an operation mode of a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

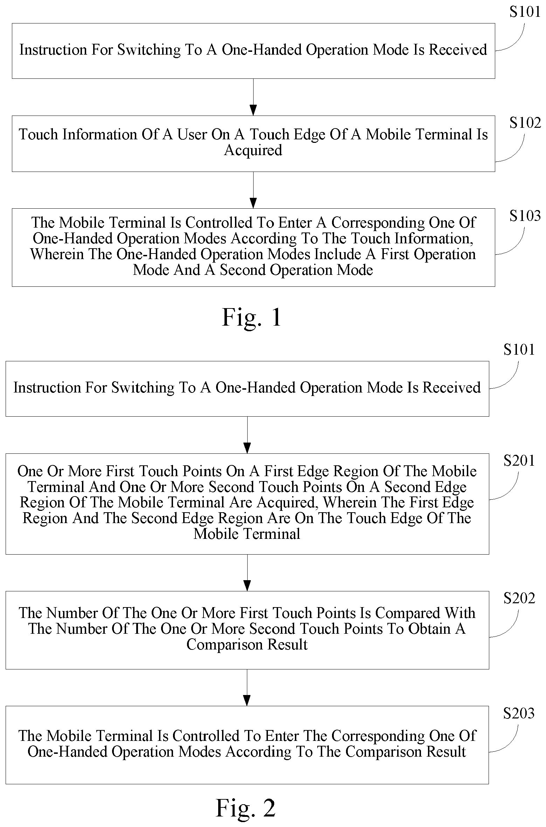

Embodiments of the present disclosure provide a method for determining an operation mode of a terminal. The method may be applied in a terminal device. As shown in Fig. 1, the method includes the following steps S101-S103.

In step S101, an instruction for switching to a one-handed operation mode is received.

When using one hand to operate a terminal, a user can input an instruction for switching to the one-handed operation mode, so that the terminal can enter the one-handed operation mode, which is convenient for the user to operate the terminal.

In step S102, touch information of a user on a touch edge of a mobile terminal is acquired.

An edge touch enables the operable region of a mobile phone to be extended from the screen to both sides of the frame of the mobile phone. The touch edge can be the frame formed by metal or plastic materials, or the like, and a touch region is set within the frame to receive touch operations of the user; or a touch screen can have no frame, and the whole touch screen is formed by glass screens without physical buttons, and all sides of the touch screen can be touched.

In step S103, the mobile terminal is controlled to enter a corresponding one of one-handed operation modes according to the touch information, wherein the one-handed operation modes include a first operation mode and a second operation mode.

In the present embodiment, when the instruction for switching to the one-handed operation mode is received, the terminal acquires the touch information of the user on the touch edge of the mobile terminal, and controls the mobile terminal to enter the corresponding one-handed operation mode (such as a left-handed operation mode or a right-handed operation mode) according to the touch information, and thus it is convenient for user operation, and user experience is improved.

As shown in Fig. 2, in one embodiment, the above step S102 may include a step S201.

In step S201, one or more first touch points on a first edge region of the mobile terminal and one or more second touch points on a second edge region of the mobile terminal are acquired. The first edge region and the second edge region are on the touch edge of the mobile terminal.

The touch edge of the mobile terminal can be divided into two edge regions (i.e., a left edge region and a right edge region), the first edge region can be the left edge region, and the second edge region can be the right edge region. When the user holds the terminal, his or her finger will contact the edge region, and one or more touch points will be formed on the edge region.

The above step S103 may include steps S202-S203.

In step S202, the number of the one or more first touch points is compared with the number of the one or more second touch points to obtain a comparison result.

In step S203, the mobile terminal is controlled to enter the corresponding one of one-handed operation modes according to the comparison result.

In the present embodiment, when the user uses different hands to hold the terminal, the number of the one or more touch points on the first touch region and the number of the one or more touch points on the second touch region are different. Therefore, by comparing the number of the one or more first touch points with the number of the one or more second touch points, the terminal can be controlled to enter the left-handed mode or the right-handed mode, and thus it is convenient for the user to use a left hand or a right hand to perform the one-handed operation, and user experience is improved.

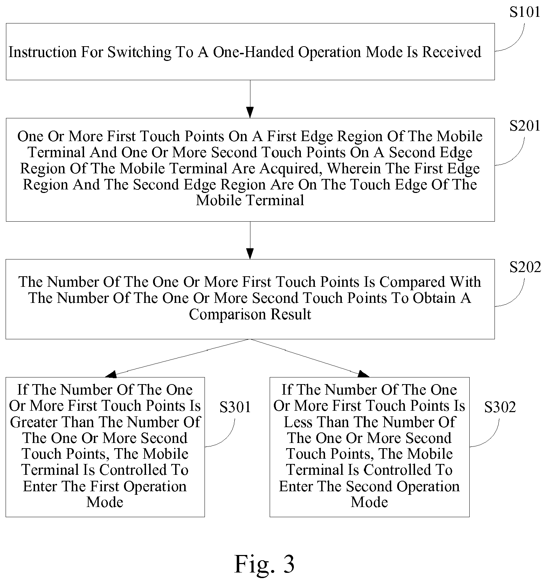

As shown in Fig. 3, in one embodiment, the above step S203 may include steps S301-S302.

In step S301, if the number of the one or more first touch points is greater than the number of the one or more second touch points, the mobile terminal is controlled to enter the first operation mode.

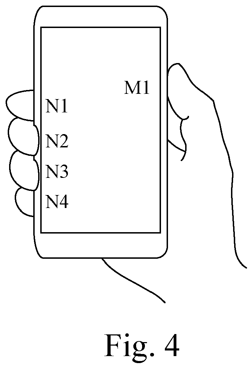

As shown in Fig. 4, for example, the first touch point is represented with "N", and the second touch point is represented with "M". In this figure, there are four first touch points , i.e., N1, N2, N3 and N4, and then the total number of the first touch points is 4; there is one second touch point, i.e., M1, and then the total number of the second touch points is 1. It can be seen that the number of the first touch points is greater than the number of the second touch point, and the mobile terminal is controlled to enter the first operation mode. The first operation mode may be the right-handed operation mode, for example.

In step S302, if the number of the one or more first touch points is less than the number of the one or more second touch points, the mobile terminal is controlled to enter the second operation mode.

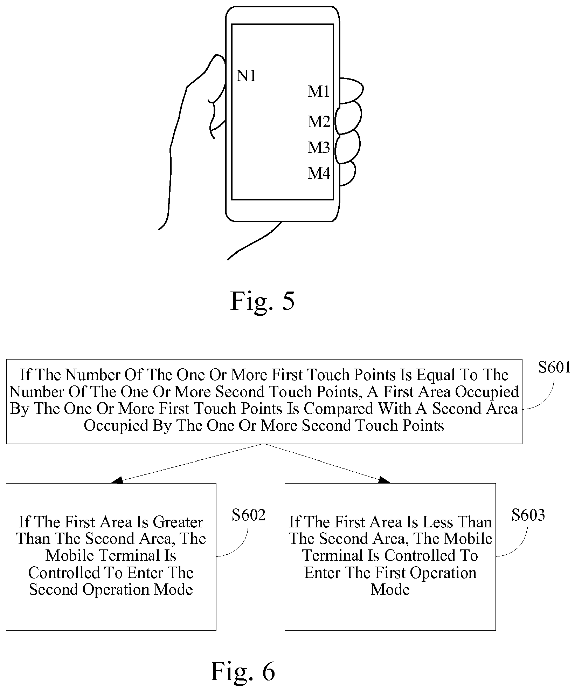

As shown in Fig. 5, similarly, the first touch point is represented with "N", and the second touch point is represented with "M". In this figure, there is one first touch point , i.e., N1, and then the total number of the first touch point is 1; there are four second touch points, i.e., M1, M2, M3 and M4, and then the total number of the second touch points is 4. It can be seen that the number of the first touch point is less than the number of the second touch points, and the mobile terminal is controlled to enter the second operation mode. The second operation mode may be the left-handed operation mode, for example.

In this way, the corresponding one-handed operation mode is entered according to actual holding manner of the mobile terminal by the user without manually setting the one-handed operation mode, and thus user operation is reduced, and user experience is improved.

As shown in Fig. 6, in one embodiment, the above S203 may further include steps S601-S603.

In step S601, if the number of the one or more first touch points is equal to the number of the one or more second touch points, a first area occupied by the one or more first touch points is compared with a second area occupied by the one or more second touch points.

In step S602, if the first area is greater than the second area, the mobile terminal is controlled to enter the second operation mode.

In step S603, if the first area is less than the second area, the mobile terminal is controlled to enter the first operation mode.

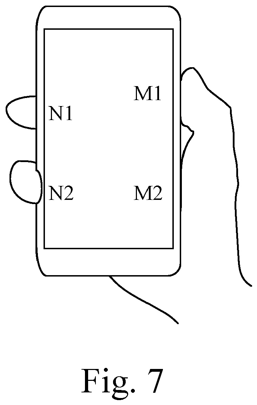

In the present embodiment, a situation that touch points on two touch regions are the same may also appear. As shown in Fig. 7, the number of the first touch points and the number of the second touch points are both 2. Since an area of touch points formed by a thumb and a palm is greater than an area of touch points formed by other fingers, whether the mobile terminal is held by the left hand or the right hand of the user at this time can be distinguished by an area occupied by the touch points. If the first area occupied by the first touch points N is greater than the second area occupied by the second touch points M, it means that the user uses the left hand to hold the mobile terminal, and thus the second operation mode (i.e., the left-handed operation mode) may be entered; and if the first area occupied by the first touch points N is less than the second area occupied by the second touch points M, it means that the user uses the right hand to hold the mobile terminal, and thus the first operation mode (i.e., the right-handed operation mode) may be entered. In this way, the corresponding one-handed operation mode is entered according to actual holding manner of the mobile terminal by the user without manually setting the one-handed operation mode, and thus user operation is reduced, and user experience is improved.

In the above embodiments, the mobile phone enters the corresponding one-handed operation mode according to the holding manner of the mobile terminal by the user. Rather, in order to more quickly enter the corresponding one-handed operation mode, the following methods can also be used.

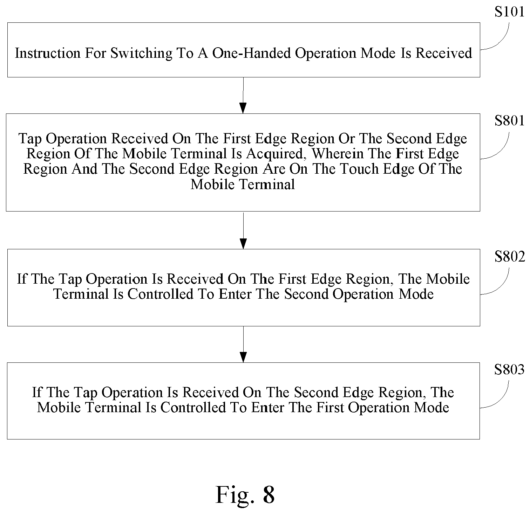

As shown in Fig. 8, in one embodiment, the above step S102 may further include a step S801.

In step S801, a tap operation received on the first edge region or the second edge region of the mobile terminal is acquired. The first edge region and the second edge region are on the touch edge of the mobile terminal.

The above step S103 may further include steps S802-S803.

In step S802, if the tap operation is received on the first edge region, the mobile terminal is controlled to enter the second operation mode.

In step S803, if the tap operation is received on the second edge region, the mobile terminal is controlled to enter the first operation mode.

In the present embodiment, the user may also enter the corresponding one-handed mode directly by tapping a touch edge region. For example, if the user wants to enter the left-handed operation mode (i.e., the second operation mode), he/she may perform the tap operation on the left frame (i.e., the first edge region). After one tap, the left-handed operation mode may be entered; otherwise, if the user wants to enter the right-handed operation mode (i.e., the first operation mode), he/she may perform the tap operation on the right frame (i.e., the second edge region). After one tap, the right-handed operation mode may be entered. In this way, user operation becomes easy, and the corresponding one-handed operation mode can be entered without cumbersome setting operations, and thus user experience is high.

The following is a device embodiment of the present disclosure, which may be used to perform the method embodiment of the present disclosure.

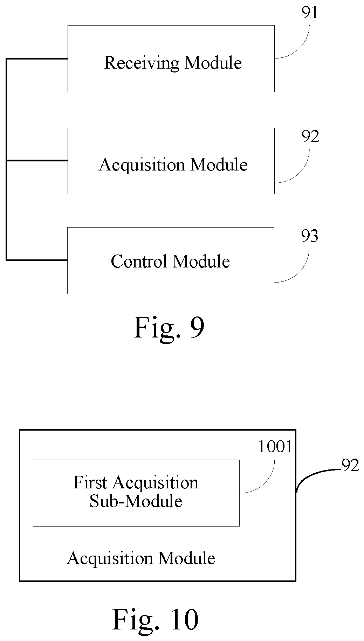

Fig. 9 is a block diagram of a device for determining an operation mode of a terminal according to an exemplary embodiment. The device can be realized by software, hardware or a combination thereof to be a part or all of an electronic equipment. As shown in Fig. 9, the device for determining the operation mode of the terminal includes a receiving module 91, an acquisition module 92 and a control module 93.

The receiving module 91 is configured to receive an instruction for switching to a one-handed operation mode.

The acquisition module 92 is configured to acquire touch information of a user on a touch edge of a mobile terminal.

The control module 93 is configured to control the mobile terminal to enter a corresponding one of one-handed operation modes according to the touch information. The one-handed operation modes include a first operation mode and a second operation mode.

In the present embodiment, when the instruction for switching to the one-handed operation mode is received, the terminal acquires the touch information of the user on the touch edge of the mobile terminal, and controls the mobile terminal to enter the corresponding one-handed operation mode (such as a left-handed operation mode or a right-handed operation mode) according to the touch information, and thus it is convenient for user operation, and user experience is improved.

As shown in Fig. 10, in one embodiment, the acquisition module 92 includes a first acquisition sub-module 1001.

The first acquisition sub-module 1001 is configured to acquire one or more first touch points on a first edge region of the mobile terminal and one or more second touch points on a second edge region of the mobile terminal. The first edge region and the second edge region are on the touch edge of the mobile terminal.

The touch edge of the mobile terminal can be divided into two edge regions (i.e., a left edge region and a right edge region), the first edge region can be the left edge region, and the second edge region can be the right edge region. When the user holds the terminal, his or her finger will contact the edge region, and one or more touch points will be formed on the edge region.

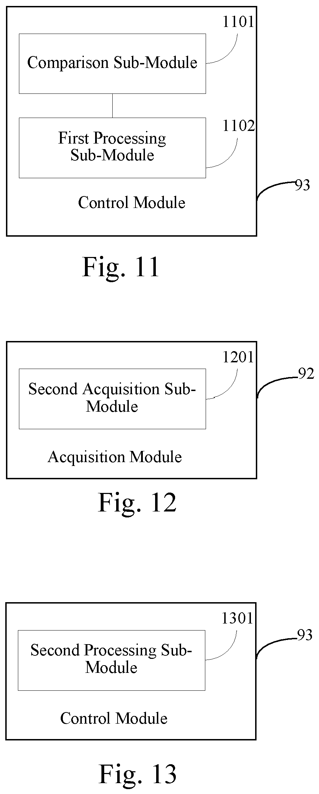

As shown in Fig. 11, in one embodiment, the control module 93 includes a comparison sub-module 1101 and a first processing sub-module 1102.

The comparison sub-module 1101 is configured to compare the number of the one or more first touch points with the number of the one or more second touch points to obtain a comparison result.

The first processing sub-module 1102 is configured to control the mobile terminal to enter the corresponding one of one-handed operation modes according to the comparison result.

In the present embodiment, when the user uses different hands to hold the terminal, the number of the one or more touch points on the first touch region and the number of the one or more touch points on the second touch region are different. Therefore, by comparing the number of the one or more first touch points with the number of the one or more second touch points, the terminal can be controlled to enter the left-handed mode or the right-handed mode, and thus it is convenient for the user to use a left hand or a right hand to perform the one-handed operation, and user experience is improved.

In one embodiment, the first processing sub-module 1102 is configured to:
if the number of the one or more first touch points is greater than the number of the one or more second touch points, control the mobile terminal to enter the first operation mode.

As shown in Fig. 4, for example, the first touch point is represented with "N", and the second touch point is represented with "M". In this figure, there are four first touch points , i.e., N1, N2, N3 and N4, and then the total number of the first touch points is 4; there is one second touch point, i.e., M1, and then the total number of the second touch points is 1. It can be seen that the number of the first touch points is greater than the number of the second touch point, and the mobile terminal is controlled to enter the first operation mode. The first operation mode may be the right-handed operation mode, for example.

In one embodiment, the first processing sub-module 1102 is configured to, if the number of the one or more first touch points is less than the number of the one or more second touch points, control the mobile terminal to enter the second operation mode.

As shown in Fig. 5, similarly, the first touch point is represented with "N", and the second touch point is represented with "M". In this figure, there is one first touch point , i.e., N1, and then the total number of the first touch point is 1; there are four second touch points, i.e., M1, M2, M3 and M4, and then the total number of the second touch points is 4. It can be seen that the number of the first touch point is less than the number of the second touch points, and the mobile terminal is controlled to enter the second operation mode. The second operation mode may be the left-handed operation mode, for example.

In this way, the corresponding one-handed operation mode is entered according to actual holding manner of the mobile terminal by the user without manually setting the one-handed operation mode, and thus user operation is reduced, and user experience is improved.

In one embodiment, the first processing sub-module 1102 is further configured to:
if the number of the one or more first touch points is equal to the number of the one or more second touch points, compare a first area occupied by the one or more first touch points with a second area occupied by the one or more second touch points;
if the first area is greater than the second area, control the mobile terminal to enter the second operation mode; and
if the first area is less than the second area, control the mobile terminal to enter the first operation mode.

In the present embodiment, a situation that touch points on two touch regions are the same may also appear. As shown in Fig. 7, the number of the first touch points and the number of the second touch points are both 2. Since an area of touch points formed by a thumb and a palm is greater than an area of touch points formed by other fingers, whether the mobile terminal is held by the left hand or the right hand of the user at this time can be distinguished by an area occupied by the touch points. If the first area occupied by the first touch points N is greater than the second area occupied by the second touch points M, it means that the user uses the left hand to hold the mobile terminal, and thus the second operation mode (i.e., the left-handed operation mode) may be entered; and if the first area occupied by the first touch points N is less than the second area occupied by the second touch points M, it means that the user uses the right hand to hold the mobile terminal, and thus the first operation mode (i.e., the right-handed operation mode) may be entered. In this way, the corresponding one-handed operation mode is entered according to actual holding manner of the mobile terminal by the user without manually setting the one-handed operation mode, and thus user operation is reduced, and user experience is improved.

As shown in Fig. 12, in one embodiment, the acquisition module 92 includes a second acquisition sub-module 1201.

The second acquisition sub-module 1201 is configured to acquire a tap operation received on the first edge region or the second edge region of the mobile terminal, wherein the first edge region and the second edge region are on the touch edge of the mobile terminal.

As shown in Fig. 13, in one embodiment, the control module 93 includes a second processing sub-module 1301.

The second processing sub-module 1301 is configured to if the tap operation is received on the first edge region, control the mobile terminal to enter the second operation mode; and if the tap operation is received on the second edge region, control the mobile terminal to enter the first operation mode.

In the present embodiment, the user may also enter the corresponding one-handed mode directly by tapping a touch edge region. For example, if the user wants to enter the left-handed operation mode (i.e., the second operation mode), he/she may perform the tap operation on the left frame (i.e., the first edge region). After one tap, the left-handed operation mode may be entered; otherwise, if the user wants to enter the right-handed operation mode (i.e., the first operation mode), he/she may perform the tap operation on the right frame (i.e., the second edge region). After one tap, the right-handed operation mode may be entered. In this way, user operation becomes easy, and the corresponding one-handed operation mode can be entered without cumbersome setting operations, and thus user experience is high.

According to a third aspect of embodiments of the present disclosure, there is provided a device for determining an operation mode of a terminal, including:
a processor; and
a memory for storing instructions executable by the processor;
wherein the processor is configured to:
   receive an instruction for switching to a one-handed operation mode;
   acquire touch information of a user on a touch edge of a mobile terminal; and
   control the mobile terminal to enter a corresponding one of one-handed operation modes according to the touch information, wherein the one-handed operation modes include a first operation mode and a second operation mode.

The above processor can be further configured to:
acquire one or more first touch points on a first edge region of the mobile terminal and one or more second touch points on a second edge region of the mobile terminal, wherein the first edge region and the second edge region are on the touch edge of the mobile terminal.

The above processor can be further configured to:
compare the number of the one or more first touch points with the number of the one or more second touch points to obtain a comparison result; and
control the mobile terminal to enter the corresponding one of one-handed operation modes according to the comparison result.

The above processor can be further configured to:
if the number of the one or more first touch points is greater than the number of the one or more second touch points, control the mobile terminal to enter the first operation mode; and
if the number of the one or more first touch points is less than the number of the one or more second touch points, control the mobile terminal to enter the second operation mode.

The above processor can be further configured to:
if the number of the one or more first touch points is equal to the number of the one or more second touch points, compare a first area occupied by the one or more first touch points with a second area occupied by the one or more second touch points;
if the first area is greater than the second area, control the mobile terminal to enter the second operation mode; and
if the first area is less than the second area, control the mobile terminal to enter the first operation mode.

The above processor can be further configured to:
acquire a tap operation received on the first edge region or the second edge region of the mobile terminal, wherein the first edge region and the second edge region are on the touch edge of the mobile terminal.

The above processor can be further configured to:
if the tap operation is received on the first edge region, control the mobile terminal to enter the second operation mode; and
if the tap operation is received on the second edge region, control the mobile terminal to enter the first operation mode.

In one embodiment, the first operation mode is a right-handed operation mode, and the second operation mode is a left-handed operation mode.

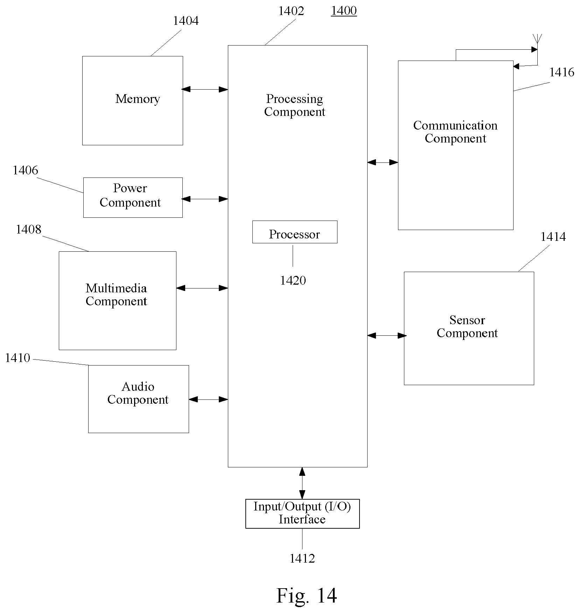

Fig. 14 is a block diagram of a device for determining an operation mode of a terminal according to an exemplary embodiment. The device may be applied in a terminal device. For example, the device 1400 may be a mobile phone, a computer, a digital broadcast terminal, a messaging device, a gaming console, a tablet, a medical device, exercise equipment, a personal digital assistant, and the like.

The device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 1404 including instructions executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a device 1400, causes the device 1400 to perform above method for determining an operation mode of a terminal, the method includes:
receiving an instruction for switching to a one-handed operation mode;
acquiring touch information of a user on a touch edge of a mobile terminal; and
controlling the mobile terminal to enter a corresponding one of one-handed operation modes according to the touch information, wherein the one-handed operation modes include a first operation mode and a second operation mode.

In one embodiment, the acquiring the touch information of the user on the touch edge of the mobile terminal includes:
acquiring one or more first touch points on a first edge region of the mobile terminal and one or more second touch points on a second edge region of the mobile terminal, wherein the first edge region and the second edge region are on the touch edge of the mobile terminal; and
the controlling the mobile terminal to enter the corresponding one of one-handed operation modes according to the touch information includes:
comparing the number of the one or more first touch points with the number of the one or more second touch points to obtain a comparison result; and
controlling the mobile terminal to enter the corresponding one of one-handed operation modes according to the comparison result.

In one embodiment, the controlling the mobile terminal to enter the corresponding one of one-handed operation modes according to the comparison result includes:
if the number of the one or more first touch points is greater than the number of the one or more second touch points, controlling the mobile terminal to enter the first operation mode; and
if the number of the one or more first touch points is less than the number of the one or more second touch points, controlling the mobile terminal to enter the second operation mode.

In one embodiment, the controlling the mobile terminal to enter the corresponding one of one-handed operation modes according to the comparison result includes:
if the number of the one or more first touch points is equal to the number of the one or more second touch points, comparing a first area occupied by the one or more first touch points with a second area occupied by the one or more second touch points;
if the first area is greater than the second area, controlling the mobile terminal to enter the second operation mode; and
if the first area is less than the second area, controlling the mobile terminal to enter the first operation mode.

In one embodiment, the acquiring the touch information of the user on the touch edge of the mobile terminal includes:
acquiring a tap operation received on the first edge region or the second edge region of the mobile terminal, wherein the first edge region and the second edge region are on the touch edge of the mobile terminal; and
the controlling the mobile terminal to enter the corresponding one of one-handed operation modes according to the touch information includes:
if the tap operation is received on the first edge region, controlling the mobile terminal to enter the second operation mode; and
if the tap operation is received on the second edge region, controlling the mobile terminal to enter the first operation mode.

In one embodiment, the first operation mode is a right-handed operation mode, and the second operation mode is a left-handed operation mode.

## Claims

1. A method for determining an operation mode of a terminal, comprising:
receiving (S101) an instruction for switching to a one-handed operation mode;
acquiring (S102) touch information of a user on a touch edge of a mobile terminal; and
controlling (S103) the mobile terminal to enter a corresponding one of one-handed operation modes according to the touch information, wherein the one-handed operation modes comprise a first operation mode and a second operation mode.

2. The method of claim 1, wherein the acquiring (S102) the touch information of the user on the touch edge of the mobile terminal comprises:
acquiring (S201) one or more first touch points on a first edge region of the mobile terminal and one or more second touch points on a second edge region of the mobile terminal, wherein the first edge region and the second edge region are on the touch edge of the mobile terminal; and
the controlling (S103) the mobile terminal to enter the corresponding one of one-handed operation modes according to the touch information comprises:
comparing (S202) the number of the one or more first touch points with the number of the one or more second touch points to obtain a comparison result; and
controlling (S203) the mobile terminal to enter the corresponding one of one-handed operation modes according to the comparison result.

3. The method of claim 2, wherein the controlling (S203) the mobile terminal to enter the corresponding one of one-handed operation modes according to the comparison result comprises:
if the number of the one or more first touch points is greater than the number of the one or more second touch points, controlling (S301) the mobile terminal to enter the first operation mode; and
if the number of the one or more first touch points is less than the number of the one or more second touch points, controlling (S302) the mobile terminal to enter the second operation mode.

4. The method of claim 2, wherein the controlling (S203) the mobile terminal to enter the corresponding one of one-handed operation modes according to the comparison result comprises:
if the number of the one or more first touch points is equal to the number of the one or more second touch points, comparing (S601) a first area occupied by the one or more first touch points with a second area occupied by the one or more second touch points;
if the first area is greater than the second area, controlling (S602) the mobile terminal to enter the second operation mode; and
if the first area is less than the second area, controlling (S603) the mobile terminal to enter the first operation mode.

5. The method of claim 1, wherein the acquiring (S102) the touch information of the user on the touch edge of the mobile terminal comprises:
acquiring (S801) a tap operation received on the first edge region or the second edge region of the mobile terminal, wherein the first edge region and the second edge region are on the touch edge of the mobile terminal; and
the controlling (S103) the mobile terminal to enter the corresponding one of one-handed operation modes according to the touch information comprises:
if the tap operation is received on the first edge region, controlling (S802) the mobile terminal to enter the second operation mode; and
if the tap operation is received on the second edge region, controlling (S803) the mobile terminal to enter the first operation mode.

6. The method of any one of claims 1-5, wherein the first operation mode is a right-handed operation mode, and the second operation mode is a left-handed operation mode.

7. A device for determining an operation mode of a terminal, comprising:
a receiving module (91) configured to receive an instruction for switching to a one-handed operation mode;
an acquisition module (92) configured to acquire touch information of a user on a touch edge of a mobile terminal; and
a control module (93) configured to control the mobile terminal to enter a corresponding one of one-handed operation modes according to the touch information, wherein the one-handed operation modes comprise a first operation mode and a second operation mode.

8. The device of claim 7, wherein the acquisition module (92) comprises:
a first acquisition sub-module (1001) configured to acquire one or more first touch points on a first edge region of the mobile terminal and one or more second touch points on a second edge region of the mobile terminal, wherein the first edge region and the second edge region are on the touch edge of the mobile terminal; and
the control module (93) comprises:
a comparison sub-module (1101) configured to compare the number of the one or more first touch points with the number of the one or more second touch points to obtain a comparison result; and
a first processing sub-module (1102) configured to control the mobile terminal to enter the corresponding one of one-handed operation modes according to the comparison result.

9. The device of claim 8, wherein the first processing sub-module (1102) is configured to:
if the number of the one or more first touch points is greater than the number of the one or more second touch points, control the mobile terminal to enter the first operation mode; and
if the number of the one or more first touch points is less than the number of the one or more second touch points, control the mobile terminal to enter the second operation mode.

10. The device of claim 8, wherein the first processing sub-module (1102) is further configured to:
if the number of the one or more first touch points is equal to the number of the one or more second touch points, compare a first area occupied by the one or more first touch points with a second area occupied by the one or more second touch points;
if the first area is greater than the second area, control the mobile terminal to enter the second operation mode; and
if the first area is less than the second area, control the mobile terminal to enter the first operation mode.

11. The device of claim 7, wherein the acquisition module (92) comprises:
a second acquisition sub-module (1201) configured to acquire a tap operation received on the first edge region or the second edge region of the mobile terminal, wherein the first edge region and the second edge region are on the touch edge of the mobile terminal; and
the control module (93) comprises:
a second processing sub-module (1301) configured to if the tap operation is received on the first edge region, control the mobile terminal to enter the second operation mode; and if the tap operation is received on the second edge region, control the mobile terminal to enter the first operation mode.

12. The device of any one of claims 7-11, wherein the first operation mode is a right-handed operation mode, and the second operation mode is a left-handed operation mode.

13. A device for determining an operation mode of a terminal, comprising:
a processor (1420); and
a memory (1404) for storing instructions executable by the processor (1420);
wherein the processor (1420) is configured to:
receive (S101) an instruction for switching to a one-handed operation mode;
acquire (S102) touch information of a user on a touch edge of a mobile terminal; and
control (S103) the mobile terminal to enter a corresponding one of one-handed operation modes according to the touch information, wherein the one-handed operation modes comprise a first operation mode and a second operation mode.

14. A computer program, which when executed on a processor (1420) of a device for determining an operation mode of a terminal, performs a method according to any one of claims 1-6.
